# EUROPÄISCHE PATENTSCHRIFT

(11) **EP 3 007 875 B1**
(45) Veröffentlichungstag und Bekanntmachung des Hinweises auf die Patenterteilung: **19.12.2018**
(21) Anmeldenummer: 14739348.2
(22) Anmeldetag: 14.05.2014
(51) Int. Cl.: B29C 45/26

(54) **WERKZEUG ZUM SPRITZGIESSEN VON KUNSTSTOFFTEILEN**
TOOL FOR THE INJECTION MOLDING OF PLASTICS PARTS
OUTIL DE MOULAGE PAR INJECTION DE PIÈCES EN MATIÈRE PLASTIQUE

(30) Priorität: 15.05.2013 DE 102013008302
(43) Veröffentlichungstag der Anmeldung: 20.04.2016
(73) Patentinhaber: Braunform GmbH, 79353 Bahlingen (DE)
(72) Erfinder: HOPFNER, Guillaume, F-67390 Elsenheim (FR)
(74) Vertreter: mepat Patentanwälte
(86) Internationale Anmeldenummer: PCT/EP2014/001297
(87) Internationale Veröffentlichungsnummer: WO 2014/183867

(56) Entgegenhaltungen:
- DE-U1- 29 816 221
- JP-A- H11 935
- US-A- 2 424 235
- US-A- 4 684 101
- US-A- 5 466 145

## Beschreibung

Die Erfindung betrifft ein Werkzeug zum Spritzgießen von Kunststoffteilen nach dem Oberbegriff des Anspruchs 1.

Werkzeuge zum Spritzgießen von Kunststoffteilen bestehen grundsätzlich aus zwei Werkzeughälften, welche auseinanderfahrbar sowie zusammenfahrbar sind. Im geschlossenen Zustand definieren die beiden Werkzeughälften zwischen sich die Formenhohlräume, in welche der viskose, heiße Kunststoff eingespritzt wird.

Um auf kostengünstige Weise unterschiedliche Kunststoffteile spritzen zu können, ohne daß komplett neue Werkzeuge geschaffen werden müssen, ist es bekannt, daß in die beiden Werkzeughälften unterschiedliche Formeinsätze eingefügt werden können. Dies bedeutet, daß das Werkzeug als solches hinsichtlich seines Grundkörpers unverändert bleibt und daß nur die Formeinsätze mit ihren Halb-Kavitäten individuell ausgebildet werden. Diese Formeinsätze lassen sich relativ preisgünstig herstellen. Die Formeinsätze werden am eigentlichen Werkzeug festgeschraubt. Auch die US 4 684 101 A beschreibt ein Werkzeug umfassend austauschbare Formeinsätze.

Davon ausgehend liegt der Erfindung die **Aufgabe** zugrunde, bei einem Werkzeug zum Spritzgießen von Kunststoffteilen der eingangs angegebenen Art die Formeinsätze zu verbessern.

Die technische **Lösung** ist gekennzeichnet durch die Merkmale im Kennzeichen des Anspruchs 1.

Die Grundidee bei dem erfindungsgemäßen Werkzeug zum Spritzgießen von Kunststoffteilen liegt in einem Schnellwechselsystem für die formgebende Fläche, also für den Formeinsatz und/oder für den Formkern, je nachdem, wo die zu verändernde formgebende Fläche ausgebildet ist. Diese kann im Formeinsatz ausgebildet sein oder aber - wenn nur ein relativ kleiner Flächenbereich verändert werden soll - auf der Oberseite des Formkerns, welcher im Formeinsatz eingebettet ist. Der Kerngedanke besteht dabei darin, daß in den Formeinsatz mehrere Formkerne einfügbar sind, wobei diese Formkerne mittels eines Schnellwechselsystems fixiert sind. Dieses Schnellwechselsystem ist dabei im eigentlichen Grundkörper des Werkzeugs, nämlich der Werkzeughälfte integriert. Dabei steht das Schnellwechselsystem mit den Formkernen derart in Wirkverbindung, daß zum Fixieren der Formkern hin zur Werkzeughälfte gezogen wird. Durch den umgekehrten Bewegungsablauf kann eine entsprechende Entriegelung vorgenommen und der Formkern wieder entnommen werden.

Gemäß der Weiterbildung in Anspruch 2 dient der Formkern nicht der Fixierung des Formeinsatzes an der Werkzeughälfte. Hier ist eine entsprechende Schraubbefestigung zwischen dem Formeinsatz und seiner zugeordneten Werkzeughälfte vorgesehen. Dies bedeutet, daß bei dieser Variante der Formkern eine formgebende Fläche aufweist, welche verändert werden soll. Zu diesem Zweck wird der alte Formkern durch Lösen des Schnellwechselsystems entnommen und durch einen anderen Formkern ersetzt. In diesem Fall liegt der Formkern auf einer Auflagefläche der Werkzeughälfte auf. Denn einen Befestigungsfunktion für den eigentlichen Formeinsatz ist nicht notwendig.

Eine Alternative hierzu schlägt Anspruch 3 vor. Hier dient der Formkern als Fixiereinrichtung zum Fixieren des Formeinsatzes in der Werkzeughälfte. Selbstverständlich kann auch hier der Formkern eine formgebende Fläche aufweisen. Der Kerngedanke besteht darin, daß zur Befestigung des Formeinsatzes mittels des Formkerns in der zugeordneten Werkzeughälfte dieser Formeinsatz - wie bisher - in eine entsprechende Ausnehmung dieser Werkzeughälfte eingesetzt wird. Als Befestigungselement dient dann ein oder mehrere, längliche Formkerne. Korrespondierend hierzu weist der Formeinsatz durchgehende Ausnehmungen auf. Diese Ausnehmungen sind im allgemeinsten Sinne dahingehend zu verstehen, daß der Formeinsatz eine durchgehende Öffnung besitzt, egal in welcher Profilierung. Als Fortsetzung dieser Ausnehmung weist dann die Werkzeughälfte eine entsprechende Fortsetzungsausnehmung auf, welche ebenfalls im allgemeinsten Sinne dahingehend zu verstehen ist, daß diese Fortsetzungsausnehmung das untere Ende des länglichen Formkerns aufnimmt. Wesentlich dabei ist, daß dieses längliche Formkern linear eingeschoben wird, so daß der seitlich auskragende bzw. seitlich überstehende Kopf dieses länglichen Formkerns in dem Formeinsatz festgelegt ist. Das untere Ende des länglichen Formkerns wird dann im Bereich des Körpers der zugeordneten Werkzeughälfte mittels eines separaten Fixierelements derart fixiert, daß das längliche Formkern nicht mehr aus der Ausnehmung herausgezogen werden kann. Dies bedeutet, daß der Formeinsatz zwischen dem Kopf des länglichen Formkerns und dem am anderen Ende angeordneten separaten Fixierelement festgelegt ist. Bei einem Wechsel des Formeinsatzes ist es dann lediglich erforderlich, das separate Fixierelement in die Entriegelungsstellung überzuführen, so daß dann das oder die länglichen Formkerne herausgezogen werden können. Damit ist der Formeinsatz frei und kann aus der Werkzeughälfte herausgenommen und durch einen anderen Formeinsatz ersetzt werden.

Vorzugsweise ist gemäß der Weiterbildung in Anspruch 4 das Formkern T-förmig ausgebildet. Die T-Form des Formkerns hat den Vorteil, daß es schlank baut und daher nur wenig Platz beansprucht. Korrespondierend zu der T-Form des Formkerns weist der Formeinsatz eine Ausnehmung auf, welche im Querschnitt korrespondierend T-förmig ausgebildet ist.

Erfindungsgemäß ist das Fixierelement quer zur Längserstreckung des länglichen Formkerns angeordnet und ausgerichtet. Dies bedeutet, daß durch diese Ausrichtung mit ein und demselben Fixierelement mehrere Formkerne fixiert werden können. Ein weiterer Vorteil besteht darin, daß das Fixierelement bezüglich der Werkzeughälfte seitlich zugänglich ist und auf technisch einfache Weise in die Verriegelungsstellung sowie in die Entriegelungsstellung übergeführt werden kann.

Eine Weiterbildung hiervon schlägt gemäß Anspruch 5 vor, daß das Fixierelement zwischen zwei Positionen verschiebbar ist. Die erste Position ist dabei die Entriegelungsstellung und die zweite Position die Verriegelungsstellung. Konkret bedeutet dies, daß zum Fixieren eines neu eingesetzten Formeinsatzes es lediglich notwendig ist, das leistenförmige Fixierelement in der Art eines Schlittens zu verschieben, so daß in der zweiten Position eine fixierende Wechselwirkung zwischen dem Fixierelement und den unteren Enden der Formkerne erfolgt. Der Vorteil in der Ausbildung dieses Fixierelements liegt darin, daß es problemlos verschiebbar ist. So ist es möglich, daß ausgehend von der Entriegelungsstellung von außen auf das schlittenartige Fixierelement gedrückt wird, um es in die Fixierposition überzuführen.

Eine weitere Weiterbildung schlägt gemäß Anspruch 6 vor, daß das Fixierelement eine Steigung aufweist. Diese Steigung ist dabei im allgemeinsten Sinne zu verstehen. So kann sie schräg, geneigt, gekrümmt etc. sein, wobei sie vorzugsweise stetig ist. Dies bedeutet, daß beim Überführen des Fixierelements von der Entriegelungsposition in die Verriegelungsposition die Formkerne durch die Steigung nach innen gezogen werden, so daß sie mit ihren Köpfen allmählich in fester Anlage zu dem Formeinsatz gelangen. Befinden sich die Formkerne dann in ihrer untersten Position, ist der Formeinsatz fest zwischen dem Kopf des Formkerns und dem Fixierelement verspannt. Wenn - umgekehrt - das Fixierelement in die Entriegelungsposition übergeführt wird, werden die Formkerne nach oben gedrückt, so daß die Köpfe über die Formeinsätze schauen. Dies hat den Vorteil, daß sie problemlos mit der Hand entnommen werden können.

Eine weitere bevorzugte Weiterbildung schlägt gemäß Anspruch 7 vor, daß zwischen dem unteren Ende des Formkerns und dem Fixierelement ein formschlüssiger Eingriff vorgesehen ist. Dieser formschlüssige Eingriff hat den Vorteil, daß damit zum einen eine einwandfreie Fixierung erfolgt und daß zum anderen bei einem in Längsrichtung verlaufenden formschlüssigen Eingriff eine Verschiebebewegung möglich ist, welche entweder die Formkerne nach innen zieht oder - in umgekehrter Richtung - nach außen drückt. Bei diesem formschlüssigen Eingriff kann es sich um miteinander korrespondierende seitliche Führungsleisten sowie seitliche Führungsnuten handeln, welche ineinandergreifen. Alternativ ist auch eine Schwalbenschwanzführung denkbar. Weitere formschlüssige Eingriffe sind denkbar.

Eine Alternative zum Fixieren des Formkerns schlägt Anspruch 8 vor. Der Grundgedanke besteht in einer bezüglich des Formkerns separaten Drehstange, welche in der Werkzeughälfte drehbar gelagert ist, und zwar mit ihrer Längsachse senkrecht zur formgebenden Oberfläche. Zum Fixieren weist die Drehstange an ihrem oberen Ende ein Außengewinde auf, welches mit einem Innengewinde des Formkerns korrespondiert. Durch entsprechendes Drehen der Drehstange um ihre Längsachse wird ihr Außengewinde in das Innengewinde des Formkerns eingedreht. Dadurch wird, da die Drehstange in Längsrichtung nicht beweglich ist, der Formkern hereingezogen und daher gegen eine entsprechende Anschlagfläche entweder des Formeinsatzes oder der Werkzeughälfte gepreßt. Wird die Drehstange in die entgegengesetzte Richtung gedreht, wird dadurch der Formkern wieder herausbewegt und kann dann von Hand entnommen werden, wenn das Außengewinde der Drehstange außer Eingriff mit dem Innengewinde des Formkerns gelangt ist.

Gemäß der Weiterbildung in Anspruch kann zum Drehen der Drehstange eine Zahnstange oder - alternativ - ein kraftflüssiges Seil oder Riemen oder Ketten vorgesehen sein. Andere Dreheinrichtungen sind denkbar.

Schließlich schlägt die Weiterbildung gemäß Anspruch 10 einen Verriegelungsstift vor, welcher im eingeschobenen Zustand das in der Verriegelungsstellung befindliche Fixierelement in seiner Verriegelungsposition formschlüssig fixiert, ohne daß die Gefahr besteht, daß sich das Fixierelement löst. Dieser Verriegelungsstift ist dabei im allgemeinsten Sinne dahingehend zu verstehen, daß er durch den Körper der Werkzeughälfte hindurchgeführt wird und mit seinem vorderen Ende in einer entsprechenden Ausnehmung im Fixierelement liegt.

Zwei Ausführungsbeispiele eines erfindungsgemäßen Werkzeugs zum Spritzgießen von Kunststoffteilen wird nachfolgend anhand der Zeichnungen beschrieben. In diesen zeigt:
- Fig. 1a: eine perspektivische Ansicht einer ersten Ausführungsform des Werkzeugs in der Betriebstellung;
- Fig. 1b: einen Querschnitt durch das Werkzeug in Fig. 1a;
- Fig. 1c: einen Längsschnitt durch das Werkzeug in Fig. 1a;
- Fig. 1d: eine Draufsicht auf das Werkzeug in Fig. 1a;
- Fig. 2a bis 2c: entsprechende Darstellungen wie in Fig. 1a bis 1c nach dem Herausziehen des Stiftes zum Entriegeln;
- Fig. 3a bis 3c: entsprechende Darstellungen wie in Fig. 2a bis 2c nach dem Verschieben des Fixierelements für die Entnahmestellung;
- Fig. 4a bis 4c: entsprechende Darstellungen wie in Fig. 3a bis 3c nach der Entnahme der T-förmigen Formkerne;
- Fig. 5a: eine perspektivische Ansicht einer zweiten Ausführungsform des Werkzeugs in der Betriebstellung;
- Fig. 5b: einen Querschnitt durch das Werkzeug in Fig. 5a;
- Fig. 5c: einen Längsschnitt durch das Werkzeug in Fig. 5a;
- Fig. 5d: eine Draufsicht auf das Werkzeug in Fig. 5a;
- Fig. 6a bis 6c: entsprechende Darstellungen wie in Fig. 5a bis 5c nach dem Herausziehen des Stiftes zum Entriegeln;
- Fig. 7a bis 7c: entsprechende Darstellungen wie in Fig. 6a bis 6c nach dem Verschieben des Fixierelements für die Entnahmestellung;
- Fig. 8a bis 8c: entsprechende Darstellungen wie in Fig. 7a bis 7c nach der Entnahme der T-förmigen Formkerne.

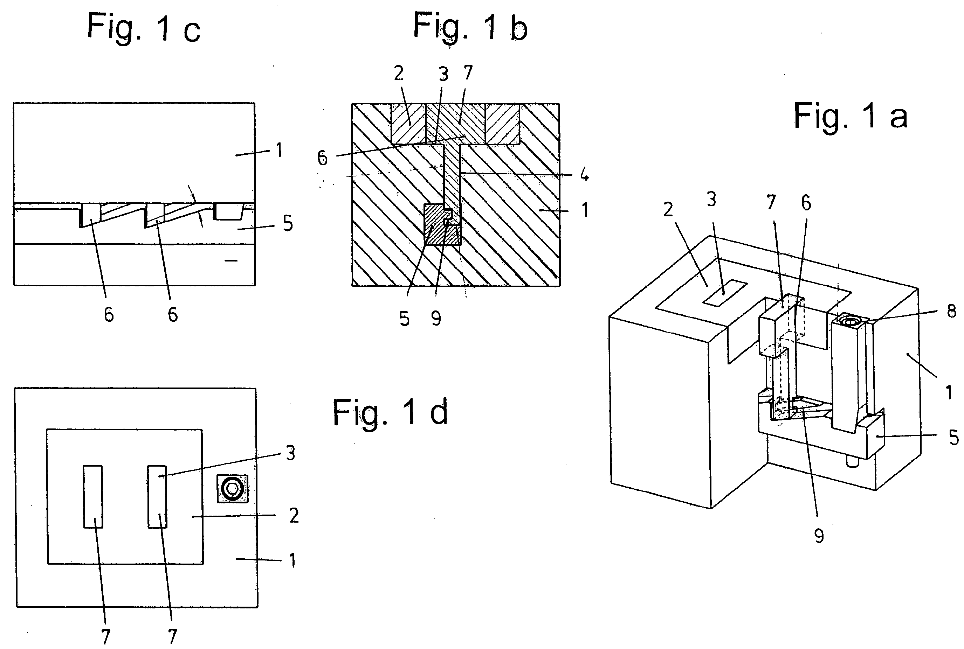

Das Werkzeug zum Spritzgießen von Kunststoffteilen der ersten Ausführungsform der Fig. 1 bis 4 weist eine erste Werkzeughälfte 1 sowie eine - nicht dargestellte - zweite Werkzeughälfte auf.

Die Werkzeughälfte 1 besitzt eine Ausnehmung zur Aufnahme eines Formeinsatzes 2. In diesem Formeinsatz 2 sind die Halb-Kavitäten zum Spritzen der Kunststoffteile ausgebildet. Zum Fixieren des Formeinsatzes 2 in der Werkzeughälfte 1 dienen Schrauben.

Der Formeinsatz 2 weist zwei durchgehende Ausnehmungen 3 auf. In Fortsetzung dieser Ausnehmungen 3 weist der Körper der Werkzeughälfte 1 Fortsetzungsausnehmungen 4 auf.

Weiterhin ist in dem Körper der Werkzeughälfte 1 ein schlittenartiges, leistenförmiges Fixierelement 5 quer zu den Ausnehmungen 3 bzw. Fortsetzungsausnehmungen 4 verschiebbar angeordnet. Die Besonderheit dieses schlittenartigen Fixierelements 5 ist, daß die Oberseite eine Schräge definiert.

Weiterhin ist ein separater, T-förmiger Formkern 6 mit einem Kopf 7 vorgesehen. Dieser Formkern 6 definiert oberseitig eine formgebende Fläche.

Schließlich ist noch ein Stift 8 vorgesehen, welcher durch eine entsprechende Ausnehmung der Werkzeughälfte 1 außerhalb des Formeinsatzes 2 in diese Werkzeughälfte 1 eingesetzt und dabei mit ihrem vorderen Ende in eine entsprechende Ausnehmung des Fixierelements 5 eingreift.

Die Funktionsweise ist wie folgt:
Fig. 1a bis 1d zeigt die Verriegelungsposition des Formeinsatzes 2 in seiner Werkzeughälfte 1. Dies bedeutet, daß sich die unteren Enden der länglichen Formkerne 6 mit dem Fixierelement 5 in einem formschlüssigen Eingriff 9 befinden. Wie insbesondere in Fig. 1b erkennbar ist, ist dieser formschlüssige Eingriff 9 durch in Längsrichtung der Schräge verlaufende, ineinander greifende Leisten und Nuten gebildet.

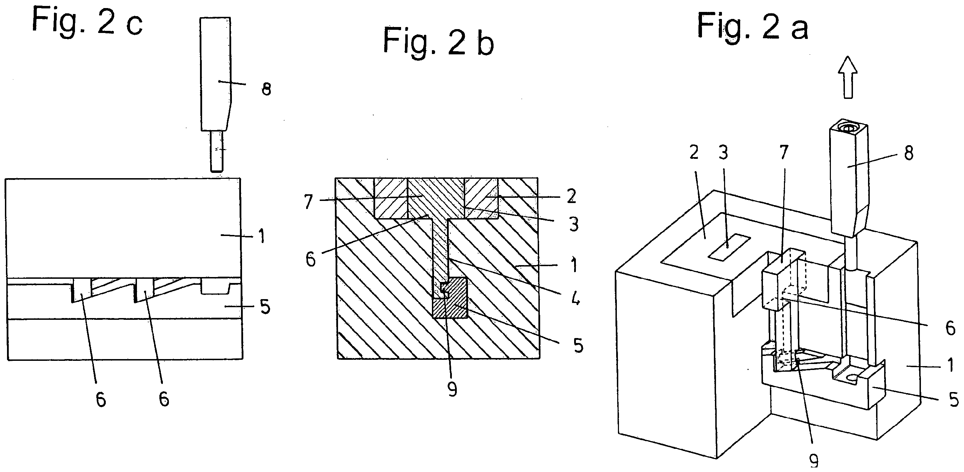

Zum Lösen der Verriegelungsvorrichtung wird gemäß Fig. 2a bis 2c der Stift 8 herausgezogen. Dadurch wird das schlittenförmige Fixierelement 5 frei.

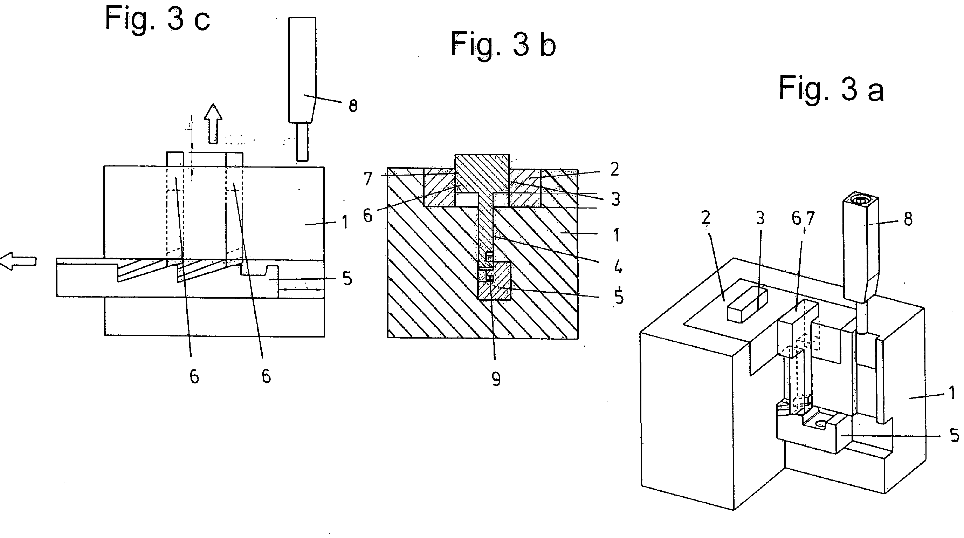

Dadurch kann dann gemäß Fig. 3a bis 3c das schlittenförmige Fixierelement 5 aus der Werkzeughälfte 1 herausgezogen werden. Die Besonderheit dabei ist, daß aufgrund der Schräge des Fixierelements 5 bzw. der Schräge des formschlüssigen Eingriffs 9 beim Herausziehen des Fixierelements 5 aus der Werkzeughälfte 1 die Formkerne 6 nach oben bewegt werden. Ganz am Schluß dieser Verschiebebewegung kommt dann der formschlüssige Eingriff 9 zwischen den unteren Enden der Formkerne 6 und dem Fixierelement 5 frei.

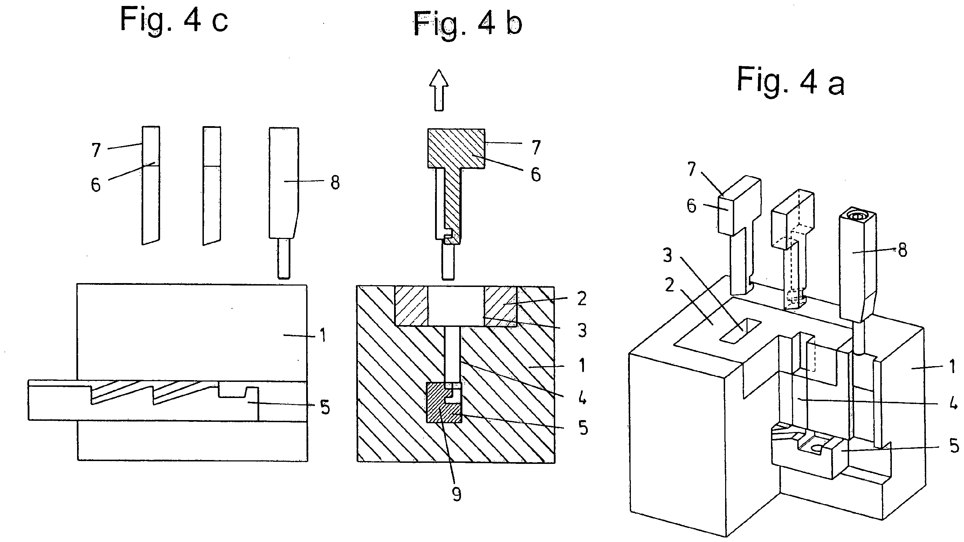

Dies bedeutet, daß gemäß Fig. 4a bis 4c die länglichen Formkerne 6 herausgezogen werden können. Dadurch wird der Formeinsatz 2 frei und kann der Werkzeughälfte 1 entnommen werden.

Der Einbau eines neuen Formeinsatzes 2 erfolgt in analoger umgekehrter Reihenfolge.

Zunächst wird der neue Formeinsatz 2 in die zugehörige Ausnehmung der Werkzeughälfte 1 eingefügt (Fig. 4a bis 4c). Anschließend werden die T-förmigen Formkerne 6 eingesteckt, so daß sie mit ihren unteren Enden auf dem schlittenförmigen Fixierelement 5 zu liegen kommen (Fig. 3a bis 3c). Anschließend wird das schlittenförmige Fixierelement 5 ins Innere der Werkzeughälfte 1 bewegt. Aufgrund der Schräge des Fixierelements 5 bzw. des dann aktivierten formschlüssigen Eingriffs 9 werden die beiden Formkerne 6 nach innen gezogen, und zwar so lange, bis das Fixierelement 5 seine Endposition erreicht hat (Fig. 2a bis 2c). Schließlich wird dann noch der Stift 8 zur Fixierung des Fixierelements 5 in der Werkzeughälfte 1 eingefügt.

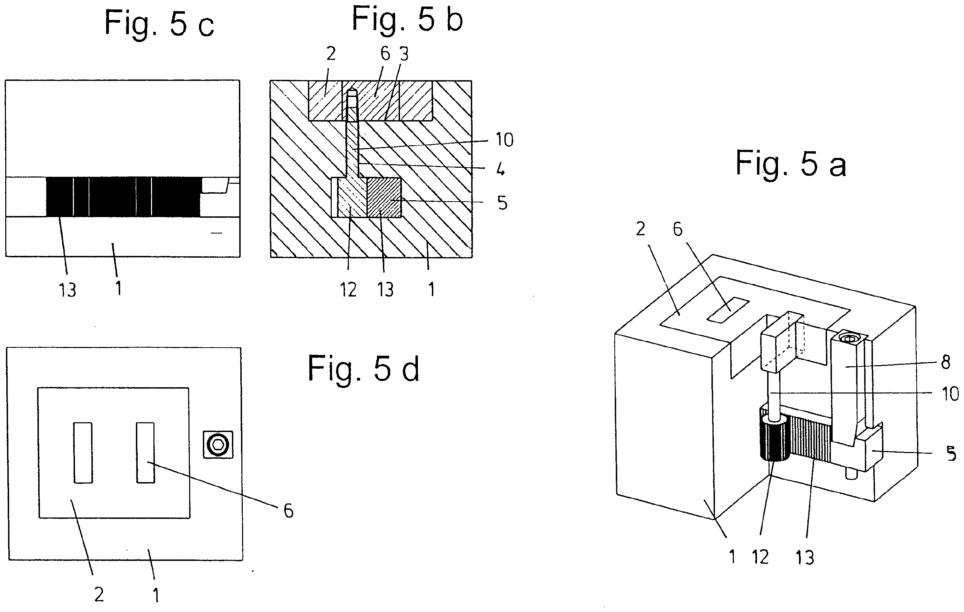

Die zweite Ausführungsform der Fig. 5 bis 8 unterscheidet sich von der ersten Ausführungsform durch die Fixierung des Formkerns 6 an der Werkzeughälfte 1.

Während bei der ersten Ausführungsform der Formkern 6 T-förmig ausgebildet ist, ist bei dieser zweiten Ausführungsform der Formkern 6 quaderförmig ausgebildet. Andere Grundformen sind allerdings denkbar.

Auf jeden Fall weist der Formkern 6 an seinem unteren Ende keine fest angeordnete Stange auf, wie dies bei der ersten Ausführungsform unterhalb des Kopfes 7 des Formkerns 6 der Fall ist. Stattdessen ist eine Drehstange 10 vorgesehen, welche in der Werkzeughälfte 1 drehbar, jedoch in Längsrichtung fixiert angeordnet ist. Diese Drehstange 10 weist am oberen Ende ein Außengewinde 11 auf. Dazu korrespondierend weist der Formkern 6 ein Innengewinde auf.

Das untere Ende der Drehstange 10 weist ein Ritzel 12 auf, welches mit einer linear verschiebbaren Zahnstange 13 kämmt. Statt des Ritzels 12 und der Zahnstange 13 kann auch ein kraftflüssiges Seil oder Riemen oder eine Kette vorgesehen sein.

Die Funktionsweise ist wie folgt:
Fig. 5a bis 5d zeigt wieder die Verriegelungsposition des Formeinsatzes 2 in seiner Werkzeughälfte 1 durch - nicht dargestellte - Schrauben. Dabei ist die Drehstange 10 mit ihrem Außengewinde 11 derart in den Formkern 6 eingedreht, daß dieser in der Zeichnung nach unten in Anlage zur Werkzeughälfte 1 gezogen ist.

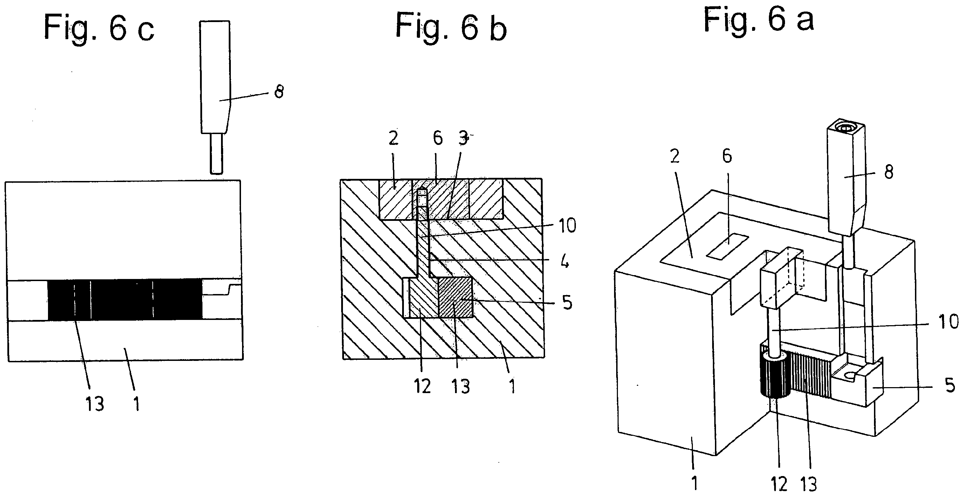

Zum Lösen der Verriegelungsvorrichtung wird gemäß Fig. 6a bis 6c der Stift 8 herausgezogen. Dadurch wird das Fixierelement 5 in Form der Zahnstange 13 frei. Auch hier kann - wie bei der ersten Ausführungsform - die Bewegung der Zahnstange 13 von Hand, mittels eines Motors, pneumatisch, elektrisch, hydraulisch oder anderweitig durchgeführt werden.

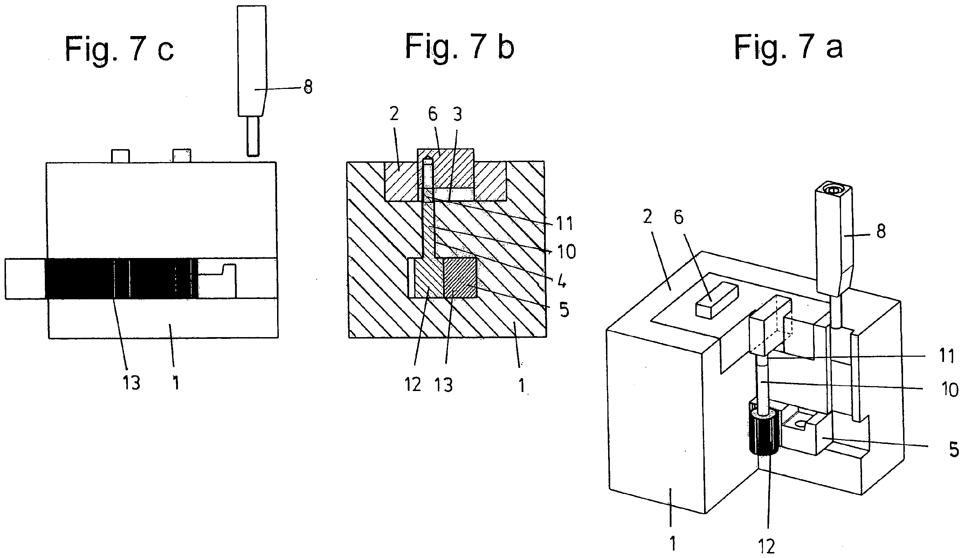

Somit kann gemäß Fig. 7a bis 7c die Zahnstange 13 aus der Werkzeughälfte 1 herausgezogen werden. Dadurch wird die Drehstange 10 in eine Drehbewegung versetzt. Da sie längsfixiert ist, drückt die sich drehende Drehstange 10 aufgrund des Gewindeganges den Formkern 6 hinaus, bis die beiden Gewinde voneinander frei werden.

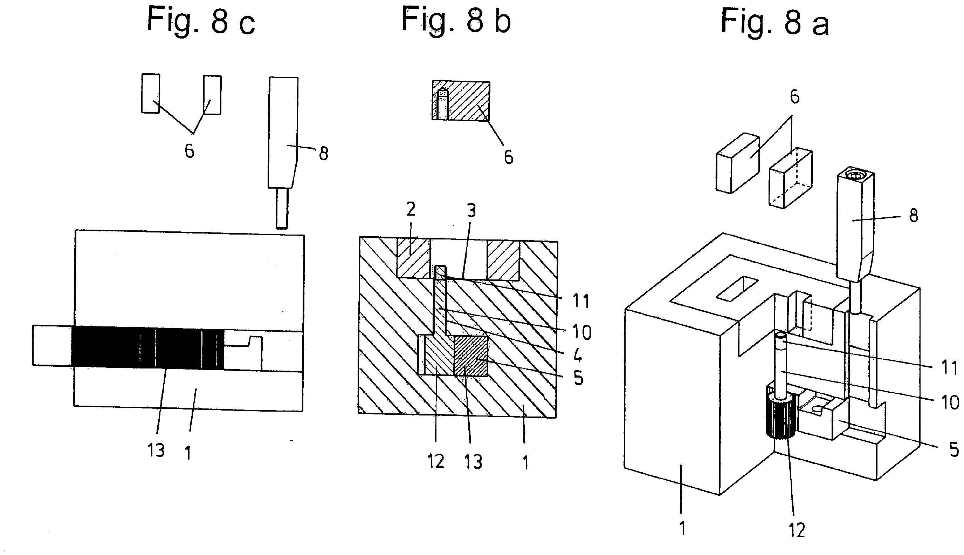

Dies bedeutet, daß gemäß Fig. 8a bis.8c die Formkerne 6 von Hand herausgezogen werden können.

Der Einbau der Formkerne 6 erfolgt in analoger umgekehrter Reihenfolge, d. h. die Formkerne 6 werden eingeführt, anschließend die Drehstange 10 mittels der Zahnstange 13 in eine Drehbewegung versetzt, so daß das Außengewinde 11 der Drehstange 10 in das Innengewinde des Formkerns 6 greift. Bei der Weiterbewegung der Zahnstange 13 wird der Formkern 6 in seine Endposition hereingezogen. Schließlich wird dann noch der Stift 8 zur Fixierung der Zahnstange 13 eingefügt.

In einer Alternative zu den beiden Ausführungsformen kann der T-förmige Formkern 6 auch zum Fixieren des Formeinsatzes 2 an der Werkzeughälfte 1 verwendet werden. Hierzu weist der Formeinsatz 2 eine zum T-förmigen Formkern 6 korrespondierende T-förmige Ausnehmung 3 mit einer Auflagefläche für den Kopf 7 des Formkerns 6 auf, gegen welche der Kopf 7 beim Verspannen gedrückt wird.

### Bezugszeichenliste

- 1: Werkzeughälfte
- 2: Formeinsatz
- 3: Ausnehmung
- 4: Fortsetzungsausnehmung
- 5: Fixierelement
- 6: Formkern
- 7: Kopf
- 8: Stift
- 9: formschlüssiger Eingriff
- 10: Drehstange
- 11: Außengewinde
- 12: Ritzel
- 13: Zahnstange

## Patentansprüche

1. Werkzeug zum Spritzgießen von Kunststoffteilen,
mit zwei auseinander fahrbaren sowie zusammen fahrbaren Werkzeughälften (1), wobei in wenigstens einer Werkzeughälfte (1) ein, wenigstens einen Formenhohlraum aufweisenden Formeinsatz (2) auswechselbar angeordnet ist und
wobei im geschlossenen Zustand der beiden Werkzeughälften (1) zwischen diesen die kompletten Formenhohlräume zum Spritzgießen der Kunststoffteile ausgebildet sind,
**dadurch gekennzeichnet,**
**dass** der Formeinsatz (2) mehrere, bezüglich der formgebenden Oberseite senkrechte, durchgehende Ausnehmungen (3) aufweist,
**dass** die dem Formeinsatz (2) zugeordnete Werkzeughälfte (1) in Fortsetzung der Ausnehmungen (3) Fortsetzungsausnehmungen (4) aufweist und
**dass** mehrere auswechselbare Formkerne (6) vorgesehen sind,
welche von oben in die Ausnehmungen (3) des Formeinsatzes (2) einfügbar sind und welche von unten her durch ein in der zugeordneten Werkzeughälfte (1) angeordnetes separates Fixierelement (5) durch die Fortsetzungsausnehmungen (4) hindurch verriegelbar sind, wobei das Fixierelement (5) quer zur Längserstreckung des länglichen Formkerns (6) angeordnet und ausgerichtet ist.

2. Werkzeug nach Anspruch 1,
**dadurch gekennzeichnet,**
**dass** der Formeinsatz (2) durch separate Fixiermittel an seiner zugeordneten Werkzeughälfte (1) befestigt ist und
**dass** der Formkern (6) auf einer Auflagefläche der Werkzeughälfte (1) oder auf einer Auflagefläche des Formeinsatzes (2) aufliegt.

3. Werkzeug nach Anspruch 1,
**dadurch gekennzeichnet,**
**dass** der Formkern (6) mit einem überstehenden Kopf (7) innerhalb des Formeinsatzes (2) versenkt festgelegt ist und dabei auf einer Auflagefläche der Werkzeughälfte (1) oder auf einer Auflagefläche des Formeinsatzes (2) aufliegt.

4. Werkzeug nach Anspruch 3,
**dadurch gekennzeichnet,**
**dass** der Formkern (6) T-förmig ausgebildet ist.

5. Werkzeug nach Anspruch 4,
**dadurch gekennzeichnet,**
**dass** der Formkern (6) unterseitig bis in die Fortsetzungsausnehmung (4) der Werkzeughälfte (1) hineinragt und
**dass** das Fixierelement (5) zwischen zwei Positionen verschiebbar ist,
wobei in der ersten Position das untere Ende des Formkerns (6) frei ist und
wobei nach dem Verschieben des Fixierelements (5) in die zweite Position das untere Ende des Formkerns (6) fixiert ist.

6. Werkzeug nach Anspruch 5,
**dadurch gekennzeichnet,**
**dass** das Fixierelement (5) mit seiner in dem unteren Ende des Formkerns (6) korrespondierenden Seite mit einer Steigung ausgebildet ist.

7. Werkzeug nach Anspruch 5 oder 6,
**dadurch gekennzeichnet,**
**dass** zwischen dem unteren Ende des Formkerns (6) und dem Fixierelement (5) ein formschlüssiger Eingriff (9) vorgesehen ist.

8. Werkzeug nach einem der Ansprüche 1 bis 7,
**dadurch gekennzeichnet,**
**dass** in der Fortsetzungsausnehmung (4) eine, vom Formkern (6) separate, Drehstange (10) drehbar angeordnet ist,
**dass** der Formkern (6) ein Innengewinde und das obere Ende der Drehstange (10) ein dazu korrespondierendes Außengewinde (11) aufweist und
**dass** die Drehstange (10) derart drehbar ist, dass sie beim Eindrehen ihres Außengewindes in das Innengewinde des Formkerns (6) diesen hereinzieht.

9. Werkzeug nach Anspruch 8,
**dadurch gekennzeichnet,**
**dass** zum Drehen der Drehstange (10) als Fixierelement (5) eine Zahnstange (13) oder ein kraftschlüssiges Seil oder Riemen oder Kette vorgesehen sein.

10. Werkzeug nach einem der vorhergehenden Ansprüche,
**dadurch gekennzeichnet,**
**dass** zum Fixieren des Fixierelements (5) in seiner zweiten Position eine in die Werkzeughälfte (1) sowie in das Fixierelement (5) einsteckbarer Stift (8) vorgesehen ist.

## Claims

1. Tool for the injection moulding of plastics parts,
with two tool halves (1) that can be driven apart and can be driven together, whereby at least one tool half (1) has a mould insert (2) comprising at least one mould hollow space arranged in it such as to be exchangeable, and whereby, in the closed state of the two tool halves (1), the entire mould hollow spaces for injection moulding of the plastics part are formed between these two,
**characterised**
**in that** the mould insert (2) comprises multiple through-going recesses (3) that are perpendicular with respect to the shape-giving upper side;
**in that** the tool half (1) assigned to the mould insert (2) comprises extension recesses (4) in extension of the recesses (3); and
**in that** multiple exchangeable mould cores (6) are provided,
which can be introduced from above into the recesses (3) of the mould insert (2) and which can be locked from below through the extension recesses (4) by means of a separate fixing element (5) that is arranged in the assigned tool half (1), whereby the fixing element (5) is arranged and aligned transverse to the longitudinal extension of the oblong mould core (6).

2. Tool according to claim 1,
**characterised**
**in that** the form insert (2) is attached to its assigned tool half (1) by means of separate affixing means, and
**in that** the mould core (6) rests on a support surface of the tool half (1) or on a support surface of the mould insert (2).

3. Tool according to claim 1,
**characterised**
**in that** the mould core (6) is affixed in submerged manner with a projecting head (7) within the mould insert (2) and, concurrently, rests on a support surface of the tool half (1) or on a support surface of the mould insert (2).

4. Tool according to claim 3,
**characterised**
**in that** the mould core (6) is designed to be T-shaped.

5. Tool according to claim 4,
**characterised**
**in that** the underside of the mould core (6) projects all the way into the extension recess (4) of the tool half (1) and
**in that** the fixing element (5) can be shifted between two positions, whereby, in the first position, the lower end of the mould core (6) is free and whereby, after the fixing element (5) is shifted into the second position, the lower end of the mould core (6) is affixed.

6. Tool according to claim 5,
**characterised**
**in that** the fixing element (5) is designed with a slope on its side that corresponds in the lower end of the mould core (6).

7. Tool according to claim 5 or 6,
**characterised**
**in that** a form-fitting catch (9) is provided between the lower end of the mould core (6) and the fixing element (5).

8. Tool according to any one of the claims 1 to 7,
**characterised**
**in that** a turning rod (10) that is separate from the mould core (6) is arranged in the extension recess (4) such that it can rotate,
**in that** the mould core (6) comprises an internal thread and the upper end of the turning rod (10) comprises a corresponding external thread (11) and
**in that** the turning rod (10) can be rotated appropriately such that it pulls out the mould core (6) when its external thread is being rotated into the internal thread of the mould core (6).

9. Tool according to claim 8,
**characterised**
**in that** a toothed rack (13) or a force-locked rope or belt or chain is provided as fixing element (5) for turning of the turning rod (10).

10. Tool according to any one of the preceding claims,
**characterised**
**in that**, for affixing the fixing element (5) in its second position, a pin (8) that can be inserted into the tool half (1) and into the fixing element (5) is provided.

## Revendications

1. Outil pour le moulage par injection de pièces en matière plastique, composé de deux moitiés d'outil (1) déplaçables l'une hors de l'autre et déplaçables ensemble,
un insert de moulage (2) présentant au moins un interstice de moulage, étant disposé de manière interchangeable au moins dans une moitié d'outil (1) et les interstices de moulage pour le moulage par injection des pièces en matière plastique étant complètement formés entre les deux moitiés d'outil (1) quand ces dernières sont à l'état fermé,
**caractérisé par le fait**
**que** l'insert de moulage (2) présente plusieurs cavités (3) continues, verticales quant à la partie supérieure façonnante,
**que** la moitié d'outil (1) affectée à l'insert de moulage (2) présente des cavités de continuité (4) en continuité des cavités (3) et
**que** plusieurs noyaux du moule (6) interchangeables sont prévus, lesquels sont insérables depuis le haut dans les cavités (3) de l'insert de moulage (2) et
lesquels sont verrouillables par les cavités de continuité (4) depuis le bas par un élément de fixation (5) séparé, disposé dans la moitié d'outil (1) affectée, l'élément de fixation (5) étant disposé et aligné perpendiculairement à l'extension longitudinale du noyau du moule (6) de forme oblongue.

2. Outil conformément à la revendication n°1,
**caractérisé par le fait**
**que** l'insert de moulage (2) est fixé par des moyens de fixation séparés sur sa moitié d'outil (1) affectée et
**que** le noyau du moule (6) repose sur une surface d'appui de la moitié d'outil (1) ou sur une surface d'appui de l'insert de moulage (2).

3. Outil conformément à la revendication n°1,
**caractérisé par le fait**
**que** le noyau du moule (6) avec une tête en saillie (7) est fixé en étant enfoncé à l'intérieur de l'insert de moulage (2) et repose ainsi sur une surface d'appui de la moitié d'outil (1) ou sur une surface d'appui de l'insert de moulage (2).

4. Outil conformément à la revendication n°3,
**caractérisé par le fait**
**que** le noyau du moule (6) est constitué en forme de T.

5. Outil conformément à la revendication n°4,
**caractérisé par le fait**
**que** le noyau du moule (6) pénètre, sur le côté inférieur, jusque dans la cavité de continuité (4) de la moitié d'outil (1) et
**que** l'élément de fixation (5) est déplaçable entre deux positions, l'extrémité inférieure du noyau du moule (6) étant libre dans la première position et
l'extrémité inférieure du noyau du moule (6) étant fixée dans la deuxième position après le déplacement de l'élément de fixation (5).

6. Outil conformément à la revendication n°5,
**caractérisé par le fait**
**que** l'élément de fixation (5) est formé avec une déclivité avec son côté correspondant dans l'extrémité inférieure du noyau du moule (6).

7. Outil conformément à la revendication n°5 ou n°6,
**caractérisé par le fait**
**qu'**un engagement par complémentarité de forme (9) est prévu entre l'extrémité inférieure du noyau du moule (6) et l'élément de fixation (5).

8. Outil conformément à l'une des revendications n°1 à n°7,
**caractérisé par le fait**
**qu'**une tige pivotante (10) séparée du noyau du moule (6) est disposée de façon rotative dans la cavité de continuité (4),
**que** le noyau du moule (6) présente un filet intérieur et que l'extrémité supérieure de la tige pivotante (10) présente un filet extérieur (11) correspondant à ce dernier et
**que** la tige pivotante (10) est rotative de façon à rentrer dans le noyau du moule (6) lors de la rotation de son filetage extérieur dans le filetage intérieur du noyau du moule (6).

9. Outil conformément à la revendication n°8
**caractérisé par le fait**
**qu'**une crémaillère (13) ou un câble ou une courroie ou une chaîne assurant une liaison solide est prévue comme élément de fixation (5) pour la rotation de la tige pivotante (10).

10. Outil conformément à l'une des revendications précédentes,
**caractérisé par le fait**
**qu'**une goupille (8) insérable dans la moitié d'outil (1) et dans l'élément de fixation (5) est prévue pour la fixation de l'élément de fixation (5) dans sa deuxième position.
